Europäisches Patentamt

European Patent Office

Office européen des brevets

(19)

(11) **EP 0 760 486 A1**

(12) **DEMANDE DE BREVET EUROPEEN**

(43) Date de publication:
05.03.1997 Bulletin 1997/10

(51) Int Cl.⁶: **G02B 5/00**

(21) Numéro de dépôt: **96401725.5**

(22) Date de dépôt: **05.08.1996**

(84) Etats contractants désignés:
**BE CH DE ES GB GR IT LI NL PT SE**

(30) Priorité: **28.08.1995 FR 9510124**

(71) Demandeur: **AEROSPATIALE SOCIETE NATIONALE INDUSTRIELLE**
**75016 Paris (FR)**

(72) Inventeur: **Lassalle, Martine**
**78960 Voisins le Bretonneux (FR)**

(74) Mandataire: **Bonnetat, Christian**
**CABINET BONNETAT**
**23, Rue de St. Pétersbourg**
**75008 Paris (FR)**

(54) **Piège à lumière**

(57)  -La présente invention concerne un piège à lumière pour un faisceau lumineux parallèle (2), comportant une pièce d'entrée (5) munie d'une ouverture tronconique (9) et un corps conique (12) solidaire du fond (10) du piège (1).

- Selon l'invention, ledit piège (1) est remarquable en ce que l'ouverture tronconique (9) se rétrécit de l'extérieur vers l'intérieur et présente à l'extérieur un diamètre égal au diamètre D du faisceau lumineux (2), la pièce d'entrée (5) présente une épaisseur E = D/(tg2A + tgA), A étant le demi-angle de l'ouverture tronconique (9), et le corps conique (12) réfléchit la lumière de façon analogue dans toutes les directions.

FIG.1

## Description

La présente invention concerne un piège à lumière.

Généralement, on utilise un tel piège à lumière dans des montages optiques ou des instruments optiques pour éliminer de la lumière parasite, susceptible de perturber les opérations à effectuer. La lumière parasite à éliminer est souvent formée d'un faisceau lumineux engendré au cours desdites opérations et non utilisé au moins en partie. Il peut s'agir par exemple de la partie diffusée et non utilisée d'un faisceau lumineux projeté sur un miroir semi-transparent, dont la partie réfléchie est nécessaire aux traitements et opérations envisagés, ou inversement.

Une telle lumière parasite est nuisible puisqu'elle est susceptible de perturber les traitements effectués, par exemple en engendrant des images parasites dans des dispositifs de traitement d'image, ou en modifiant l'intensité lumineuse dans des instruments de mesure de l'intensité lumineuse.

Par le document FR-2 088 198, on connaît un piège à lumière destiné à éliminer un faisceau lumineux parasite, ledit piège à lumière comportant une enceinte de révolution comprenant :

- une paroi latérale à surface interne absorbante ;
- une pièce d'entrée agencée longitudinalement à une extrémité de ladite enceinte, présentant une face interne et une face externe, et munie d'une ouverture traversante tronconique coaxiale à ladite enceinte, par laquelle le faisceau lumineux est susceptible de pénétrer dans l'enceinte ;
- un fond agencé longitudinalement à l'autre extrémité de ladite enceinte ; et
- un corps conique solidaire dudit fond et coaxial à ladite enceinte, dont la pointe de cône est en regard de l'ouverture tronconique.

Ladite ouverture tronconique se rétrécit de la face interne de la pièce d'entrée vers la face externe.

De plus, la partie d'entrée comporte, sur la face externe autour de ladite ouverture tronconique, une surface inclinée destinée à réfléchir un rayonnement lumineux rencontrant ladite surface vers une surface périphérique absorbante prévue en regard de celle-ci.

Ce moyen auxiliaire d'élimination de lumière est destiné à des faisceaux lumineux, dont au moins une partie ne peut pas pénétrer dans ladite enceinte, c'est-à-dire :

- soit à des faisceaux lumineux qui ne sont pas centrés sur l'ouverture tronconique,
- soit à des faisceaux lumineux dont le diamètre est supérieur au diamètre de ladite ouverture tronconique.

Ledit piège à lumière connu présente l'inconvénient de ne pas complètement éliminer la lumière parasite traitée puisque :

- d'une part, le rayonnement qui est traité par ledit moyen auxiliaire d'élimination de lumière n'est pas totalement annihilé ; et
- d'autre part, le rayonnement qui est traité dans l'enceinte risque d'être partiellement réfléchi vers l'extérieur de celle-ci, notamment en raison du mode d'agencement de l'ouverture tronconique.

La présente invention a pour objet de remédier à ces inconvénients. Elle concerne un piège à lumière du type décrit précédemment qui est formé de manière à présenter une efficacité sensiblement accrue.

A cet effet, selon l'invention, le piège à lumière pour un faisceau lumineux parallèle, comportant une enceinte de révolution comprenant :

- une paroi latérale à surface interne absorbante ;
- une pièce d'entrée agencée longitudinalement à une extrémité de ladite enceinte, présentant une face interne et une face externe, et munie d'une ouverture traversante tronconique coaxiale à ladite enceinte, par laquelle le faisceau lumineux est susceptible de pénétrer dans l'enceinte ;
- un fond agencé longitudinalement à l'autre extrémité de ladite enceinte ; et
- un corps conique solidaire dudit fond et coaxial à ladite enceinte, dont la pointe de cône est en regard de ladite ouverture tronconique,

est remarquable :

- en ce que ladite ouverture tronconique se rétrécit de la face externe de la pièce d'entrée vers la face interne pour concentrer la lumière et présente sur ladite face externe un diamètre égal au diamètre D dudit faisceau lumineux ;
- en ce que ladite pièce d'entrée présente longitudinalement à ladite enceinte une épaisseur E définie par la relation :

$$E = D/(tg2A + tgA),$$

tgA étant la tangente de A et A étant le demi-angle de ladite ouverture tronconique ; et
- en ce que ledit corps conique est réalisé en une matière réfléchissant la lumière de façon analogue dans toutes les directions.

Ainsi, grâce à l'invention, le faisceau lumineux traité est complètement éliminé, puisque :

- le diamètre de l'ouverture tronconique est adapté audit faisceau lumineux de sorte que ce dernier pénètre entièrement dans l'enceinte ;
- l'épaisseur de la pièce d'entrée est choisie de manière à optimiser la concentration du faisceau lumineux à l'intérieur de l'enceinte ;

- l'ouverture tronconique, qui se rétrécit vers la face interne de la pièce d'entrée et y présente un diamètre considérablement réduit, empêche toute sortie de lumière de l'enceinte ; et
- la réflexion par le corps conique de la lumière dans toutes les directions entraîne une atténuation de l'amplitude de celle-ci, ce qui facilite son absorption par la paroi interne de l'enceinte (éventuellement après plusieurs réflexions successives sur ladite paroi interne et ledit corps conique) et donc son élimination.

Par ailleurs, de façon avantageuse, pour un faisceau lumineux formé d'une lumière visible, ledit corps conique est revêtu de sulfate de baryum, tandis que, pour un faisceau lumineux formé d'un rayonnement infrarouge, ledit corps conique est revêtu d'or.

En outre, la paroi latérale est formée avantageusement de manière à dissiper la chaleur. A cet effet, elle est réalisée de préférence en cuivre, éventuellement revêtu de matériau absorbant en fonction du rayonnement incident.

Les figures du dessin annexé feront bien comprendre comment l'invention peut être réalisée. Sur ces figures, des références identiques désignent des éléments semblables.

La figure 1 montre schématiquement un piège à lumière conforme à l'invention.

La figure 2 illustre schématiquement la pièce d'entrée d'un piège à lumière conforme à l'invention.

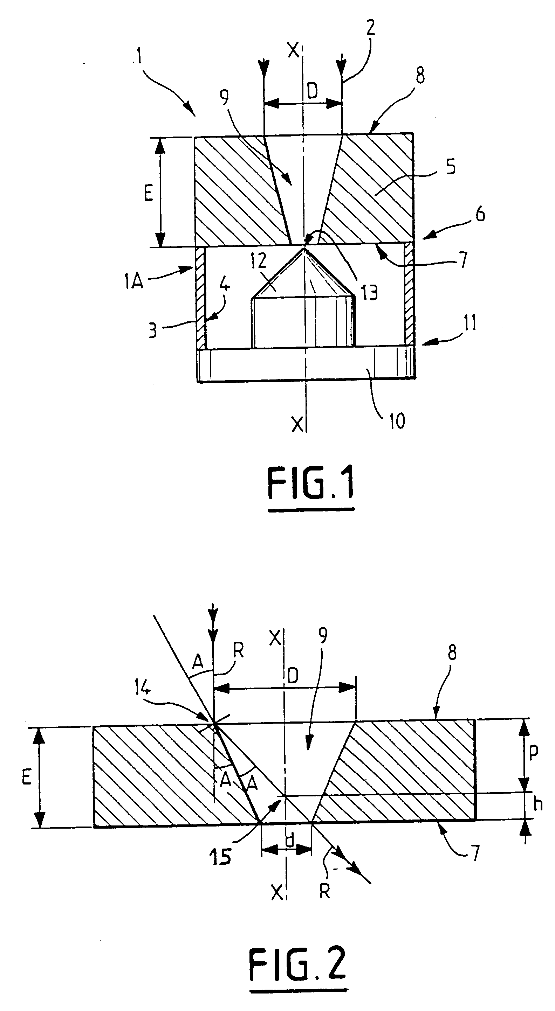

Le piège à lumière 1 conforme à l'invention et représenté schématiquement sur la figure 1 est destiné à éliminer un faisceau lumineux parallèle 2 présentant une section transversale circulaire de diamètre D.

De façon connue, ledit piège à lumière 1 comporte une enceinte de révolution IA d'axe X-X comprenant :

- une paroi latérale 3 à surface interne absorbante 4 ;
- une pièce d'entrée 5 agencée longitudinalement à une extrémité 6 de ladite enceinte 1A, présentant une face interne 7 et une face externe 8, et munie d'une ouverture traversante tronconique 9 coaxiale à ladite enceinte 1A, par laquelle le faisceau lumineux 2 est susceptible de pénétrer dans l'enceinte 1A ;
- un fond 10 agencé longitudinalement à l'autre extrémité 11 de ladite enceinte 1A ; et
- un corps conique 12 solidaire dudit fond 10 et coaxial à ladite enceinte 1A, dont la pointe de cône 13 est en regard de ladite ouverture tronconique 9.

Selon l'invention, afin d'obtenir une élimination complète dudit faisceau lumineux parallèle 2, ledit piège à lumière 1 présente les caractéristiques suivantes :

- l'ouverture tronconique 9 présente sur la face externe 8 de la pièce d'entrée 5 un diamètre égal au diamètre D du faisceau lumineux 2 à éliminer. Ainsi, en centrant le piège 1 sur le faisceau lumineux 2, ledit faisceau lumineux 2 pénètre entièrement dans l'enceinte 1A. Il n'existe pas de réflexion dudit faisceau 2 sur la face externe 8 de la pièce d'entrée 5 ;
- l'ouverture tronconique 9 se rétrécit de ladite face externe 8 vers la face interne 7 de la pièce d'entrée 5, de manière à présenter sur ladite face interne 7 un diamètre $\underline{d}$ réduit (représenté sur la figure 2), qui empêche une éventuelle sortie d'un rayonnement de l'enceinte 1A après réflexion interne ;
- la pièce d'entrée 5 présente longitudinalement à l'enceinte 1A une épaisseur E définie, en relation avec l'ouverture tronconique 9, de manière à optimiser la concentration du faisceau lumineux 2 à l'intérieur de l'enceinte 1A, tel que précisé ci-dessous en référence à la figure 2 ; et
- le corps conique 12 est réalisé en une matière réfléchissant la lumière de façon analogue dans toutes les directions et non de façon spéculaire. A cet effet, on utilise de préférence du sulfate de baryum lorsque le faisceau lumineux est formé d'un rayonnement visible et de l'or lorsqu'il est formé d'un rayonnement infrarouge ou proche infrarouge.

Ainsi, les rayonnements qui pénètrent dans l'enceinte IA sont réfléchis dans toutes les directions par le corps conique 12 de sorte qu'ils sont fortement affaiblis en amplitude. De ce fait, ils sont plus facilement absorbés par la surface interne 4 de la paroi 3, agencée en regard dudit corps conique 12. Bien entendu, selon l'intensité des rayonnements considérés, plusieurs réflexions successives sur ladite surface interne 4 et ledit corps conique 12 peuvent être nécessaires pour éliminer complètement lesdits rayonnements.

En outre, la paroi latérale 3 est formée de manière à dissiper la chaleur engendrée par l'absorption de la lumière. A cet effet, on réalise de préférence ladite paroi latérale 3 en cuivre, avec un revêtement de matériau absorbant en fonction du rayonnement incident.

Ainsi, grâce aux caractéristiques précitées, le piège à lumière 1 conforme à l'invention permet d'éliminer complètement le faisceau lumineux traité 2.

Par ailleurs, comme indiqué précédemment, l'épaisseur E de la pièce d'entrée 5 et les dimensions de l'ouverture tronconique 9 sont choisies conjointement de manière à permettre une concentration optimale de la lumière à l'intérieur de l'enceinte 1A.

Plus précisément, ces dimensions sont choisies de sorte qu'un rayonnement R qui subit une réflexion à l'extrémité externe 14 de l'ouverture 9 pénètre dans l'enceinte IA sans réflexion supplémentaire, tel que représenté sur la figure 2. Ledit rayonnement R coupe l'axe X-X en un point 15.

En définissant :

- A comme le demi-angle de l'ouverture tronconique

$\underline{h}$ comme la distance longitudinale (suivant l'axe X-X) entre la face interne 7 et le point 15, et

$\underline{p}$ comme la distance longitudinale entre la face externe 8 et le point 15, c'est-à-dire E=h+p,

on obtient facilement les relations suivantes à partir de la figure 2 :

- tg2A = D/(2p), tg2A étant la tangente de l'angle 2A, qui permet d'obtenir la relation :

$$p = D/(2tg2A) \qquad (1)$$

- tg2A = d/(2h), qui permet d'obtenir la relation :

$$h = d/(2tg2A) \qquad (2).$$

Lesdites relations (1) et (2) permettent de déduire l'expression :

$$(D+d) = 2Etg2A \qquad (3).$$

De plus, on a la relation tgA = (D-d)/(2E), c'est-à-dire

$$(D-d) = 2EtgA \qquad (4).$$

Finalement, on déduit des relations précédentes (3) et (4) l'expression :

$$E = D/(tg2A+tgA) \qquad (5).$$

Cette dernière expression (5) précise donc l'épaisseur optimale E selon l'invention de la pièce d'entrée 5, en fonction d'un diamètre D et d'un demi-angle A déterminés.

## Revendications

1. Piège à lumière pour un faisceau lumineux parallèle (2), comportant une enceinte de révolution (1A) comprenant :

    - une paroi latérale (3) à surface interne absorbante (4) ;
    - une pièce d'entrée (5) agencée longitudinalement à une extrémité (6) de ladite enceinte (1A), présentant une face interne (7) et une face externe (8), et munie d'une ouverture traversante tronconique (9) coaxiale à ladite enceinte (1A), par laquelle le faisceau lumineux (2) est susceptible de pénétrer dans l'enceinte (1A) ;
    - un fond (10) agencé longitudinalement à l'autre extrémité (11) de ladite enceinte (1A) ; et
    - un corps conique (12) solidaire dudit fond (10) et coaxial à ladite enceinte (1A), dont la pointe de cône (13) est en regard de ladite ouverture tronconique (9),

caractérisé :

    - en ce que ladite ouverture tronconique (9) se rétrécit de la face externe (8) de la pièce d'entrée (5) vers la face interne (7) pour concentrer la lumière et présente sur ladite face externe (8) un diamètre égal au diamètre D dudit faisceau lumineux (2) ;
    - en ce que ladite pièce d'entrée (5) présente longitudinalement à ladite enceinte (1A) une épaisseur E définie par la relation :

$$E = D/(tg2A + tgA),$$

tgA étant la tangente de A et A étant le demi-angle de ladite ouverture tronconique (9) ; et
    - en ce que ledit corps conique (12) est réalisé en une matière réfléchissant la lumière de façon analogue dans toutes les directions.

2. Piège à lumière selon la revendication 1, pour un faisceau lumineux formé d'une lumière visible, caractérisé en ce que ledit corps conique (12) est revêtu de sulfate de baryum.

3. Piège à lumière selon la revendication 1, pour un faisceau lumineux formé d'un rayonnement infrarouge, caractérisé en ce que ledit corps conique (12) est revêtu d'or.

4. Piège à lumière selon l'une quelconque des revendications précédentes, caractérisé en ce que ladite paroi latérale (3) est formée de manière à dissiper la chaleur.

5. Piège à lumière selon la revendication 4, caractérisé en ce que ladite paroi latérale (3) est réalisée en cuivre.

6. Pièce à lumière selon la revendication 5, caractérisé en ce que ladite paroi latérale en cuivre est revêtue d'un matériau absorbant en fonction du rayonnement incident.

## FIG.1

## FIG.2

EP 0 760 486 A1

Office européen
des brevets

**RAPPORT DE RECHERCHE EUROPEENNE**

Numero de la demande
EP 96 40 1725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | FR-A-2 088 198 (ANVAR)<br>* revendication 1; figures 1-3 *<br>--- | 1 | G02B5/00 |
| A | FR-A-2 477 288 (B.VIDAL ET AL.)<br>* revendications 1-3; figure 1 *<br>--- | 1 | |
| A | PATENT ABSTRACTS OF JAPAN<br>vol. 013, no. 407 (E-818), 8 Septembre 1989<br>& JP-A-01 146385 (TOSHIBA), 8 Juin 1989,<br>* abrégé *<br>--- | 1 | |
| A | US-A-3 675 984 (J.C.VULMIERE ET AL.)<br>* abrégé; figure 3 *<br>----- | 1 | |

| | DOMAINES TECHNIQUES RECHERCHES (Int.Cl.6) |
|---|---|
| | G02B<br>H01S |

Le présent rapport a été établi pour toutes les revendications

| Lieu de la recherche | Date d'achèvement de la recherche | Examinateur |
|---|---|---|
| LA HAYE | 3 Septembre 1996 | Malic, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)